# EUROPEAN PATENT APPLICATION

(11) **EP 4 641 788 A1**
(43) Date of publication of application: **29.10.2025**
(21) Application number: 24172664.5
(22) Date of filing: 26.04.2024
(51) Int. Cl.: H01M 50/209, H01M 50/271, H01M 50/276, H01M 50/30, H01M 50/342

(54) **BATTERY SYSTEM INCLUDING IMPROVED CELL COVER**

(71) Applicant: Samsung SDI Co., Ltd., Yongin-si, Gyeonggi-do 17084 (KR)
(72) Inventor: Tripaum, Florian, 7412 Wolfau (AT); Prossnigg, Florian, 8047 Graz (AT)
(74) Representative: Gulde & Partner

(57) **Abstract**

The present disclosure refers to a battery system (100) including a plurality of battery cells (12) arranged along a stacking direction, wherein each of the battery cells (12) includes a venting side with a venting exit (14) for discharging a venting gas stream (V), a cover element (20) covering the plurality of battery cells (12) at the venting sides to protect the battery cells (12) from the venting gas stream (V), wherein the cover element includes a plurality of individual cell covers, each individual cell cover covering one battery cell of the plurality of battery cells, wherein neighboring individual cell covers are separated from each other by slits penetrating through the cover element such that each individual cell cover is adapted to get torn away individually from the covered battery cell by the pressure of the venting gas stream (V) discharged from the covered venting exit.

## Description

### Field of the Disclosure

The present disclosure relates to a battery system and a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery in the related art is to let the venting gas stream discharged by the battery cell(s) expand into the battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells. To protect the battery cells from this, a cover element may be provided covering the battery cells at their venting side.

Such a cover element may include venting openings in the form of through-holes that are aligned with the venting exits of the battery cells to let the venting gas stream pass through the cover element in case of a thermal runaway of one of the covered battery cells. After passing through the cover element, particles of the discharged venting gas stream may deposit onto the cover element. Thereby, however, particles of the venting gas stream may pass through another venting opening of the cover element that is aligned with the venting exit of one of the battery cells and may thus enter the other battery cell. This may lead to thermal propagation to the other battery cell and, in the worst case, incite a thermal runaway in the other battery cell.

To address this problem, a cover element may be provided that is thin enough to rupture at sections opposite venting exits of the battery cells and corresponding in form to the venting exits when exposed to the high pressure of the venting gas stream exiting one of the covered battery cells affected by a thermal runaway. Also, the cover element may, at sections opposite the venting exits, include perforations corresponding to the venting exits so as to provide a predetermined breaking point that may rupture when exposed to the high pressure of the venting gas stream.

These solutions, however, bear the risk that the cover element is bent outwards by the pressure of the venting gas stream before the cover element ruptures, the cover element thereby lifting off from battery cells adjacent to the affected battery cell so that venting gas might possibly flow underneath the cover element towards the adjacent battery cells. This may lead to thermal propagation to the adjacent battery cells and, in the worst case, incite a thermal runaway in the adjacent battery cells.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system is provided including a plurality of battery cells arranged along a stacking direction, wherein each of the battery cells includes a venting side with a venting exit for discharging a venting gas stream, and a cover element covering the plurality of battery cells at the venting sides to protect the battery cells from the venting gas stream, wherein the cover element includes a plurality of individual cell covers, each individual cell cover covering one battery cell of the plurality of battery cells, wherein neighboring individual cell covers are separated from each other by slits penetrating through the cover element such that each individual cell cover is adapted to get torn away individually from the covered battery cell by the pressure of the venting gas stream discharged from the covered venting exit.

According to an aspect of the present disclosure, the cover element is formed in one piece from a sheet material and the individual cell covers are formed in the sheet via slitting.

According to an aspect of the present disclosure, the cover element is a mica sheet.

According to an aspect of the present disclosure, the cell cover includes end portions which surround electrode terminals of the battery cells and connect the individual cell covers.

According to an aspect of the present disclosure, each individual cell cover may cover more than 50%, more than 60%, more than 70%, more than 80% of the venting side of the battery cell it covers.

According to an aspect of the present disclosure, each of the individual cell covers includes a material weakening portion opposite the venting exit of the battery cell that is covered by the individual cell cover.

According to an aspect of the present disclosure, the material weakening portion is a perforation.

According to an aspect of the present disclosure, the battery system further includes a cell carrier element fixating the cover element against the venting sides of the battery cells.

Yet another aspect of the present disclosure refers to an electric vehicle including the battery system according to the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic perspective exploded view of a battery system according to an embodiment of the present disclosure.
- FIG. 2: illustrates a schematic top view of the cover element of the battery system shown in FIG. 1.
- FIG. 3: illustrates a schematic sectional view of the battery system shown in FIG. 1 showing only the battery cells and the cover element.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells. The battery cells may be accommodated inside a battery housing of the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic cells.

Each of the battery cells includes a venting exit at a venting side of the battery cell, which may be a terminal side of the battery cells where the electrode terminals of the battery cells are disposed. Each venting exit is adapted to allow for a venting gas stream to be discharged from the respective battery cell during a thermal runaway of this battery cell. Venting valves may be provided at the venting exits which may open upon a predefined pressure being exceeded.

The battery system further includes a heat-resistant cover element, or cover sheet, that is arranged such that it covers the plurality of battery cells at their venting sides. For example, the cover element may cover the top side of the battery cells. The cover element covers all of the battery cells of the plurality of battery cells, i.e. the cover element extends about the venting sides of all of the battery cells of the plurality of battery cells.

The cover element includes a plurality of individual cell covers. The cell covers are individual in the sense that exactly one cell cover is provided for each of the battery cells that are covered by the cover element. Thus, each of the individual cell covers is arranged to cover one battery cell of the plurality of battery cells in a one-to-one relationship. In other words, every battery cell has its own individual cell cover. All the individual cell covers, however, are part of the cover element. Each individual cell cover may cover one battery cell of the plurality of battery cells including the venting exit of the one battery cell. The individual cell covers are distinguished from one another via slits. That is, neighboring individual cell covers are separated from each other by slits penetrating through the cover element. In other words, the individual cell covers are formed from the cover element by providing the cover element with slits. These slits are longitudinal cuts or openings that extend through the cover element. Thus, the slits may be provided by cutting/slitting the cover element. The slits may be provided by cutting/slitting the cover element between neighboring battery cells. The slits may be distributed along the stacking direction and extend perpendicular to the stacking direction. Each slit may extend along a longitudinal side of the battery cells. The slits may extend between electrode terminals of the battery cells. The individual cell covers may be interconnected by end portions of the cover element, i.e. portions to where the slits do not extend. The cover element and thus its individual cell covers are heat-resistant, may for example be made of, or consist of, a heat-resistant material.

In case one of the battery cells is affected by a thermal runaway, a venting gas stream is discharged from the affected battery cell via its venting exit. As the venting exit of the affected battery cell is covered by one of the individual cell covers, a pressure builds up by the venting gas stream which the individual cell cover cannot withstand. Consequently, the individual cell cover gets torn away by the venting gas stream. Due to the slits the individual cell covers are adapted to get torn away, or blown away, individually from the covered battery cell by the pressure of the discharged venting gas stream exiting the covered venting exit. The individual cell covers may get torn away individually in the sense that they do not affect neighboring individual cell covers during this process, e.g. that they do not take neighboring individual cell covers with them. In other words, the individual cell covers are separated, or decoupled, from each other via the slits such that each individual cell cover may get torn away by a venting gas stream that exits the venting exit of the respective battery cell that is covered by the individual cell cover without affecting, e.g. lifting, adjacent individual cell covers. Thus, merely the individual cell cover covering the battery cell undergoing thermal runaway is torn away but not the individual cell covers of other battery cells of the plurality of battery cells. Thus, the venting gas stream cannot get between the cover element and another one of the battery cells. The cover element with its remaining individual cell covers protects the other battery cells from the discharged venting gas stream, i.e. the cover element shields the covered battery cells from the venting gasses and products discharged by the affected battery cell.

Thus, as the individual cell covers get torn away separately, the cover element according to the disclosure mitigates the risk that the cover element is bent outwards by the pressure of the venting gas stream and thus prevents that the venting gas stream flows underneath the cover element towards adjacent battery cells. This effectively prevents thermal propagation and thus a thermal runaway of further battery cells.

According to an embodiment, the cover element is formed in/as one piece from a sheet material and the individual cell covers are formed in the sheet via slitting. That is, the cover element may be formed from a single piece of sheet material, wherein the slits and thus the individual cell covers are formed by slitting, or cutting, the cover element. This provides for a simple manufacturing of the cover element.

According to an embodiment, the cover element is a mica sheet. That is, the sheet material may be a mica sheet. In other words, the cover element may be formed in one piece from a mica sheet. The cover element, and therefore the individual cell covers, may thus include mica. Mica means mica silicate minerals. The slits may be formed by cutting/slitting the mica sheet. Thus, also the individual cell covers may be made of mica. Such mica sheets are heat-resistant so that the cover element may withstand any particles from the venting gas stream being deposited onto the cover element. Also, such a mica sheet may be a suitable material for allowing the individual cell covers to be torn away by the venting gas stream as intended.

According to an embodiment, the cover element includes end portions which surround electrode terminals of the battery cells and connect the individual cell covers. The electrode terminals of the battery cells may be arranged at opposite ends of the respective battery cell at its venting side. The cover element may, with its end portions, cover the venting sides around the areas where the electrode terminals are disposed. The electrode terminals are not covered by the cover element but instead reach through the cover element, e.g. via through-holes of the cover element. The through-holes for the electrode terminals may be cut into the cover element. The individual cell covers may be disposed between the opposite end portions of the cover element and may be interconnected by the end portions, i.e. portions to where the slits do not extend. The cover element may thus protect an entire (top) side of the battery cells including the area surrounding the electrode terminals.

According to an embodiment, each individual cell cover covers a major part of the venting side of the battery cell it covers. For example, each individual cell cover may cover more than 50%, more than 60%, more than 70%, or more than 80% of the venting side, for example the top side, of the battery cell it covers. For example, each individual cell cover may cover the entire venting side, or top side, of the respective battery cell aside from the electrode terminals which may be disposed at the opposite ends of the battery cell at the venting sides. The individual cell covers covering the major part of the venting side of the respective battery cells provides an adequate protection of the respective battery cells and allows for the venting side of the respective battery cell to be exposed over a large area when the individual cell cover is torn away by the venting gas stream exiting the venting exit of the respective battery cell.

According to an embodiment, each of the individual cell covers includes a material weakening portion opposite the venting exit of the battery cell that is covered by the individual cell cover. According to an embodiment, the material weakening portion is a perforation. Thus, the individual cell covers may, at sections opposite the venting exits, include material weakening portions (such as perforations) corresponding to the venting exits so as to provide a predetermined breaking point that may rupture when exposed to the high pressure of the venting gas stream. The material weakening portion may correspond to the underlying venting exit in shape. Such material weakening portions may ensure that the venting gas stream can leave the underlying battery cell that is affected by the thermal runaway. The venting gas stream may rupture the material weakening portion of the individual cell cover covering the affected battery cell and also tear away the individual cell cover at least in part. Due to the slits, however, the venting gas stream will lift of adjacent individual cell covers and can thus not reach adjacent battery cells.

According to an embodiment, the battery system further includes a cell carrier element fixating the cover element against the venting sides of the battery cells. The cell carrier element may be connected to a battery frame and/or the battery housing of the battery system and may provide structural stability. The cell carrier element may cover the cover element and the battery cells. The cell carrier element may press the cover element against the venting side of the battery cells. This may ensure reliable connection of the cover element to the venting side of the battery cells during a thermal runaway. Further elements may be disposed between the cell carrier element and the cover element such as, for example, a flexible printed circuit for providing an outside electrical connection to the battery cells and/or touch protection elements.

The invention also pertains to an electric vehicle including a battery system according to the disclosure, for example as a traction battery.

### Specific Embodiments

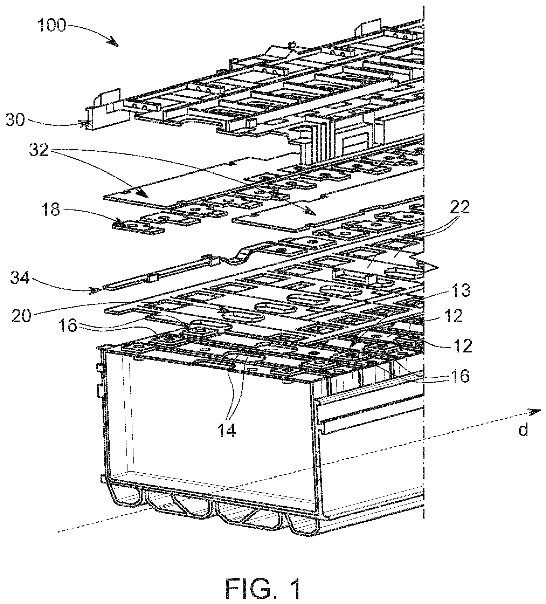

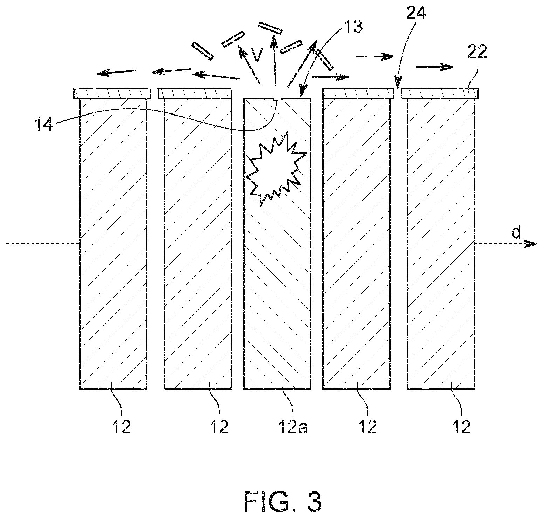

FIG. 1 shows a battery system 100 according to an embodiment of the present disclosure, the battery system 100 including a plurality of battery cells 12 that are arranged along a stacking direction d to form a cell stack. Each of the battery cells 12 includes, at a venting side thereof, a venting exit 14 for discharging a venting gas stream V (see FIG. 3) in case of a thermal runaway. Each of the venting exits 14 may include a venting valve. The venting sides of the battery cells 12 form a top side 13 of the battery cells 12. At opposite ends at the top side 13 each battery cell 12 includes an electrode terminal 16, wherein the electrode terminals 16 of different battery cells 12 may be interconnected via busbars 18. A flexible circuit 34 may be connected to the busbars 18 to provide an outwards electrical connection. Further, a touch protection element 32 may be disposed on the busbars 18 and electrode terminals 16. The plurality of battery cells 12, and the further elements, may be arranged inside a not-shown battery housing.

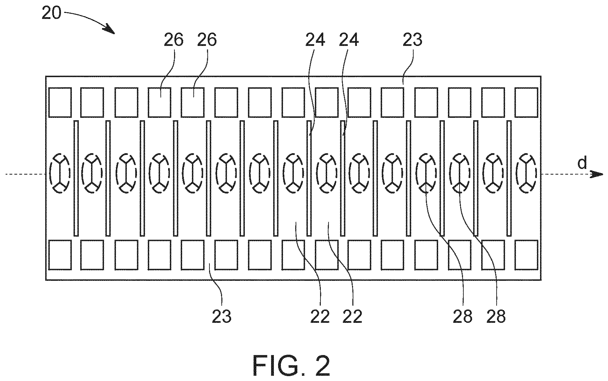

A heat-resistant cover element 20 made as one-piece of a mica sheet is disposed on the battery cells 12 at their venting sides. The cover element 20 is shown from above in FIG. 2. The cover element 20 covers the plurality of battery cells 12 at their top side 13 and may be pressed onto the battery cells 12 via a cell carrier element 30 that may be connected to the battery housing. The cover element 20 includes a plurality of individual cell covers 22, wherein each individual cell cover 22 is arranged to cover one battery cell 12 of the plurality of battery cells 12. Thus, each of the battery cells 12 has its own individual cell cover 22. The individual cell covers 22 cover a major part of the top side 13 of the battery cells, for example more than 60% of the top side 13, including the venting exits 14.

The individual cell covers 22 are separated from each other by slits 24 penetrating through the cover element 20. The slits 24 may be distributed along the stacking direction d and may extend perpendicular to the stacking direction d as shown in FIG. 3. The slits 24 may be provided by cutting/slitting the mica sheet that constitutes the cover element 20. Thus, by cutting the slits 24 into the one-piece cover element 20 the individual cell covers 22 are formed in the cover element 20. At end portions 23 of the cover element 20 includes cutouts that form through-holes 26 which the electrode terminal 16 of the battery cells 12. The end portions 23 thus surround the electrode terminals 16 of the battery cells 12 and connect the individual cell covers 22.

In case of a thermal runaway occurring in one of the battery cells 12, a venting gas stream V leaves the venting exit of the battery cell 12 affected by the thermal runaway at the top side 13, see FIG. 3. The venting gas stream V thereby exerts a pressure onto the individual cell cover 22 disposed above the venting exit 14 such that the individual cell cover 22 gets torn away individually from the affected battery cell 12'. The individual cell cover 22 may get torn to pieces during this process as shown schematically in FIG. 3. The way for the venting gas stream V is then free so that the venting gas stream V may spread into a venting channel above the cover element 20. Because of the slits 24 merely the one single individual cell cover 22 that covers the affected battery cell 12a is torn away, not the other individual cell covers 22 covering the neighboring battery cells 12. The other individual cell covers 22 thus stay in place and may continue to fulfill their function of protecting the covered battery cells 12 from the venting gas stream V. That is, particles from the venting gas stream V may deposit onto the other individual cell covers 22 without damaging the below battery cell 12.

Each of the individual cell covers 22 may include a perforation 28 (see FIG. 2) as a material weakening portion disposed opposite the venting exit 14 of the battery cell 12 that is covered by the individual cell cover 22. These perforations 28 may rupture above the affected battery cell 12a because of the discharged venting gas stream V which may ease the way for the venting gas stream V. Nevertheless, the individual cell cover 22 may get torn away at least partly by the venting gas stream V.

### Reference signs

- 12: battery cells
- 12a: affected battery cell
- 13: top side of battery cells
- 14: venting exits
- 16: electrode terminals
- 18: busbars
- 20: cover element
- 22: individual cell covers
- 24: slits
- 26: through-holes receiving electrode terminals
- 28: perforation
- 30: cell carrier element
- 32: touch protection
- 34: flexible circuit
- 100: battery system
- V: venting gas stream

## Claims

1. A battery system (100), comprising:
a plurality of battery cells (12) arranged along a stacking direction, wherein each of the battery cells (12) comprises a venting side with a venting exit (14) for discharging a venting gas stream (V), and
a cover element (20) covering the plurality of battery cells (12) at the venting sides to protect the battery cells (12) from the venting gas stream (V),
wherein the cover element (20) comprises a plurality of individual cell covers (22), each individual cell cover (22) covering one battery cell of the plurality of battery cells (12),
wherein neighboring individual cell covers (22) are separated from each other by slits (24) penetrating through the cover element (20) such that each individual cell cover (22) is adapted to get torn away individually from the covered battery cell (12) by the pressure of the venting gas stream (V) discharged from the covered venting exit (14).

2. The battery system (100) according to claim 1, wherein the cover element (20) is formed in one piece from a sheet material and the individual cell covers (22) are formed in the sheet via slitting.

3. The battery system (100) according to any one of the preceding claims, wherein the cover element (20) is a mica sheet.

4. The battery system (100) according to any one of the preceding claims, wherein the cover element (20) comprises end portions (23) which surround electrode terminals (16) of the battery cells (12) and connect the individual cell covers (22).

5. The battery system (100) according to any one of the preceding claims, wherein each individual cell cover (22) may cover more than 50%, more than 60%, more than 70%, more than 80% of the venting side of the battery cell (12) it covers.

6. The battery system (100) according to any one of the preceding claims, wherein each of the individual cell covers (22) comprises a material weakening portion opposite the venting exit (14) of the battery cell (12) that is covered by the individual cell cover (22).

7. The battery system (100) according to claim 6, wherein the material weakening portion is a perforation (28).

8. The battery system (100) according to any one of the preceding claims, further comprising a cell carrier element (30) fixating the cover element (20) against the venting sides of the battery cells (12).

9. An electric vehicle comprising the battery system (100) according to any one of the preceding claims.

## Amended claims

### Amended claims in accordance with Rule 137(2) EPC.

1. A method for dynamically reclaiming storage space in a disaggregated storage system (104), the method comprising:
retrieving a plurality of data levels and a plurality of endurance levels of a plurality of storage nodes (504a - 504d), wherein each data level of the plurality of data levels corresponds to an amount of data present in each storage segment of one or more storage segments (501₁ - 501₆) associated with each of the plurality of storage nodes;
determining a first delta range based on a difference between first parameters and on a workload, wherein the first parameters are each based on the plurality of data levels, wherein the workload is associated with the plurality of storage nodes;
determining a second delta range based on a difference between second parameters and on the workload, wherein the second parameters are each based on the plurality of endurance levels;
identifying one or more source nodes (504a) among the plurality of storage nodes based on the first delta range;
identifying one or more destination nodes (504b) among the plurality of storage nodes based on the second delta range;
identifying a set of storage node pairs, among the one or more source nodes (504a) and the one or more destination nodes (504b), based on a Quality-of-service Penalty Coefficient, QPC, wherein the QPC corresponds to a number of network hops required to establish a data path between the two storage nodes in a storage node pair of the set of storage node pairs; and
performing reclamation of at least one storage segment (501₁ - 501₆) among the set of storage node pairs.

2. The method as claimed in claim 1, wherein performing reclamation of the at least one storage segment (501₁ - 501₆) comprises:
initializing the QPC to zero; and
iteratively performing following steps until a predefined number of storage segments (501₁ - 501₆) have been reclaimed among the set of storage node pairs:
determining one or more storage node pairs among the set of storage node pairs based on the QPC;
determining a Reclaim Efficiency Coefficient, REC, of each storage node pair of the one or more storage node pairs, wherein the REC corresponds to a number of storage segments (501₁ - 501₆) that can be reclaimed from a source node (504a) of each storage node pair;
performing reclamation of the at least one storage segment from a source node (504a) of the one or more storage node pairs, based on the REC;
updating data levels and endurance levels associated with the one or more storage node pairs;
determining a number of storage segments (501₁ - 501₆) based on the reclamation of the at least one storage segment of the one or more storage node pairs; and
incrementing the QPC.

3. The method as claimed in claim 1 or 2, wherein the plurality of data levels corresponds to one of:
an amount of invalid data present in the one or more storage segments (501₁ - 501₆); or
an amount of valid data present in the one or more storage segments (501₁ - 501₆).

4. The method as claimed in any one of the preceding claims, wherein the plurality of data levels and the plurality of endurance levels are dynamically updated.

5. The method as claimed in any one of the preceding claims, wherein the one or more first parameters comprise a maximum invalid data level, a minimum invalid data level, a mean invalid data level, a maximum valid data level, a minimum valid data level, and/or a mean valid data level associated with the plurality of storage nodes.

6. The method as claimed in any one of the preceding claims, wherein the first delta range comprises:
a difference between a said parameter that is a maximum invalid data level and a said parameter that is a mean invalid data level when the plurality of data levels correspond to an amount of invalid data present in the one or more storage segments (501₁ - 501₆); or
a difference between a said parameter that is a mean valid data level and a said parameter that is a minimum valid data level when the plurality of data levels correspond to an amount of valid data present in the one or more of storage segments (501₁ - 501₆).

7. The method as claimed in any one of the preceding claims, wherein the one or more second parameters comprise a maximum endurance level, a minimum endurance level, and/or a mean endurance level associated with the plurality of storage nodes.

8. The method as claimed in any one of the preceding claims, wherein the second delta range comprises a difference between a said parameter that is a mean endurance level and a said parameter that is a minimum endurance level.

9. The method as clamed in any one of the preceding claims, wherein the workload comprises a read-intensive workload or a write-intensive workload.

10. The method as clamed in claim 9, wherein the first delta range and the second delta range are reduced by half when the workload is the write-intensive workload.

11. A system for dynamically reclaiming storage space in a disaggregated storage system, the system for dynamically reclaiming storage space comprising:
a memory; and
a processor configured to:
retrieve a plurality of data levels and a plurality of endurance levels of a plurality of storage nodes, wherein each data level of the plurality of data levels corresponds to an amount of data present in each storage segment of one or more storage segments (501₁ - 501₆) associated with each of the plurality of storage nodes;
determine a first delta range based on a difference between first parameters and on a workload, wherein the first parameters are each based on the plurality of data levels, wherein the workload is associated with the plurality of storage nodes;
determine a second delta range based on a difference between second parameters and on a workload, wherein the second parameters are each based on the plurality of endurance levels;
identify one or more source nodes (504a) among the plurality of storage nodes based on the first delta range;
identify one or more destination nodes (504b) among the plurality of storage nodes based on the second delta range;
identify a set of storage node pairs, among the one or more source nodes (504a) and the one or more destination nodes (504b), based on a Quality-of-service Penalty Coefficient, QPC, wherein the QPC corresponds to a number of network hops required to establish a data path between the two storage nodes in a storage node pair of the set of storage node pairs; and
perform reclamation of at least one storage segment (501₁ - 501₆) among the set of storage node pairs.

12. The system as claimed in claim 11, wherein the processor is configured to perform the reclamation of the at least one storage segment (501₁ - 501₆) by:
initializing the QPC to zero; and
iteratively performing following steps until a predefined number of storage segments (501₁ - 501₆) have been reclaimed among the set of storage node pairs:
determine one or more storage node pairs among the set of storage node pairs based on the QPC;
determine a Reclaim Efficiency Coefficient, REC, of each storage node pair of the one or more storage node pairs, wherein the REC corresponds to a number of storage segments (501₁ - 501₆) that can be reclaimed from a source node (504a) of each storage node pair;
perform reclamation of the at least one storage segment (501₁ - 501₆) from a source node (504a) of the one or more storage node pairs, based on the REC;
update data levels and endurance levels associated with the one or more storage node pairs;
determine a number of storage segments (501₁ - 501₆) based on the reclamation of the at least one storage segment of the one or more storage node pairs; and
increment the QPC.

13. The system as claimed in claim 11 or 12, wherein the plurality of data levels comprises:
an amount of invalid data present in the one or more storage segments (501₁ - 501₆); or
an amount of valid data present in the one or more storage segments (501₁ - 501₆).

14. The system as claimed in claim 12 and preferably any one of claims 11 to 13, wherein the processor is configured to dynamically update the plurality of data levels and the plurality of endurance levels.

15. A system as claimed in claim 11, wherein the processor is further configured to:
perform the reclamation of the at least one storage segment of the storage node pair of the set of storage node pairs, based on said Reclaim Efficiency Coefficient, REC, of the storage node pair of the set of storage node pairs, wherein the REC corresponds to a number of storage segments that can be reclaimed from the storage node pair of the set of storage node pairs.
